(19) Europäisches Patentamt
European Patent Office
Office européen des brevets

(11) Publication number: **0 361 787 A2**

(12) **EUROPEAN PATENT APPLICATION**

(21) Application number: 89309603.2

(51) Int. Cl.5: **G06F 15/72**

(22) Date of filing: 21.09.89

(30) Priority: 30.09.88 JP 244499/88

(43) Date of publication of application: 04.04.90 Bulletin 90/14

(84) Designated Contracting States: DE FR GB

(71) Applicant: **International Business Machines Corporation**
Old Orchard Road
Armonk, N.Y. 10504(US)

(72) Inventor: **Kawabe, Shinji**
6-2-25-301 Tsuchihashi Miyamae-ku
Kawasaki-shi Kanagawa-ken(JP)
Inventor: **Masuda, Hiroshi**
Niwa mansion 2-14 Chihaya-cho
Toshima-ku Tokyo-to(JP)
Inventor: **Shimada, Kenji**
1438-184 Ohozenji Asao-ku
Kawasaki-shi Kanagawa-ken(JP)

(74) Representative: **Burt, Roger James, Dr.**
IBM United Kingdom Limited Intellectual Property Department Hursley Park
Winchester Hampshire SO21 2JN(GB)

(54) **A boundary representation solid modelling system.**

(57) A boundary representation solid modelling system is described that enables building of a solid-model through a trial-and-error approach. The result of a non-manifold union set operation on a geometric model is used to update a non-manifold boundary representation date file. Correspondence between elements in the boundary representation file and primitives is retained in another store. This allows elements of a non-manifold boundary representation, originating from a primitive, to be identified when the primitive is specified, and vice-versa. A history of set operations is also stored. Reworking of a set operation is achieved by selecting a primitive to delete, accessing and deleting corresponding elements from the boundary representation file and modifying the set operation history file. The invention thus enables cancellation of reworking of a set operation independently of its order. Hence, or a set operation executed at any given time can be rapidly reworked.

EP 0 361 787 A2

# A BOUNDARY REPRESENTATION SOLID MODELLING SYSTEM

This invention relates to a boundary representation (B-rep) solid modelling system, and, more particularly, to a solid modelling system that enables easy building of a solid model through a trial-and-error approach.

Solid modelling systems are utilized for design of a product or for simulation in the field of design and production.

A solid model means a three-dimensional model of an object in a computer.

Set operation is widely used as a means for building a solid model. Set operation is a general term for an operation to obtain a union set, a difference set or an intersection set as shown in Figure 3. A final definition of a geometric model is achieved by appropriate set operations on model's or primitives predefined by a system.

In an application, such as product design, it is necessary to build a solid model through a trial-and-error approach. To this end, functions are provided that recover a geometric model by cancelling a modification operation already performed, and reworking the operation. Techniques, which are currently employed to implement such functions, are discussed with reference to two typical internal representations of a solid model, that is, CSG (constructive solid geometry) representation and B-rep.

CSG representation describes the space that a desired model occupies by positioning primitives, such as a parallelpiped and a cylinder, in a space. The geometric model can be represented by a logical binary tree structure of the primitives as shown in Figure 4.

A geometric model can be easily reshaped by replacing the shapes or positions of the primitives in the binary tree structure, or rewriting the logical operation. However, CSG representation does not positively manage boundary data such as what volume or edge is produced as the result of an operation. Many applications require such boundary data, so that, in many cases, a B-rep is also calculated from the CSG representation. Overall, CSG representation is limited in that many applications cannot directly utilize boundary data although reshaping or reworking can be easily performed.

B-rep represents a volume by the relation of elements such as vertexes, edges and faces constituting a geometric model (Figure 5). When a set operation is applied to two volumes, a new volume is generated and by further processing of the resultant new volume, a final geometric model is built. Although the execution of a set operation is similar to that in CSG representation, a model of the boundary representation retains new boundary data of the result of the set operation as data representing the volume.

Two methods can be used to reshape a geometric model in B-rep:

(1) Execute modification operations all over again.

(2) Describe a modification operation in an Euler operation, and reshape a geometric model backward by applying reverse operations.

Method (1) corrects the volume by discarding the geometric model built until that moment, and re-executing the operations all over again; the CSG representation is generally retained as the history of the operations generating the B-rep. A new geometric model is rebuilt by referring to and modifying the CSG representation. However, this method involves a large amount of processing, even if only a minor modification is to be made.

Method (2) defines all operations for modifying a geometric model, such as set operations, as a macro of basic operations called "Euler operations," and backtracks the course of the modification by utilizing the reversibility of the basic operations. This method appears in publications such as:

M. Mantyla and R. Sulonen, "GWB: A Solid Modeler with the Euler Operators," IEEE Computer Graphics, Vol. 2, No. 7, Sept. 1982, pp. 17-31.

B. G. Baumgart, "A Polyhedron Representation for Computer Vision," AFIPS Conf. Proc., Vol. 44, 1975 NCC, pp. 589-596.

The Euler operation is a modification operation used to create a new face by adding edges for example, which maintains the relation of the Euler-Poincare equation:

$v - e + f = 2(s - h) + r$

wherein v: number of vertexes, e: number of edges, f: number of faces, s: number of shell, h: number of thruholes, and r: number of rings (holes in a face).

The Euler operation always accompanies a reverse operation, and an operation described as a macro of a combination of Euler operations can be recovered by backtracking the history of the operations.

In this case, the time required for reworking operations depends on the order of the operation to be reworked. It is easy to return to the state immediately before the operation. However, if it is desired to rework an operation performed at an early stage, it is necessary to backtrack to that point through reverse operations. Thus it is necessary to reverse operations that are not related to reworking, and then return to the current point after completion of the intended reworking by forward operations. This process is very time consuming.

Overall conventional methods require that a solid model be rebuilt all over again, or that operations be backtracked sequentially to recover the previous geometric model even if, during building of the solid model, it is intended to modify a part of the model by cancelling the set operations already executed. This requires an enormous amount of calculation.

According to the invention, calculation time required for cancellation or reworking of the set operation does not depend on the order of the set operation. Therefore, the set operation executed at any given time can be rapidly reworked.

A boundary representation solid modelling system is presented comprising; means for specifying a kind of set operations and inputting a geometric model, means for executing a non-manifold union set operation and updating a non-manifold boundary representation data file with a result of the operation, each time a geometric model is input, means for updating element correspondence data file which describes correspondence between an element of the boundary representation and an input geometric model, means for updating a set operation history data file by adding data on the specified kind of set operations and the input geometric model,means for referring to the set operation history data file and marking elements in the non-manifold boundary representation to be output as a result of the set operation, and storage means for storing the boundary representation data file, the element correspondence data file, and the set operation history data file.

A specific embodiment of the invention will now be described with the aid of the accompanying drawings in which:-

Figure 1 is a block diagram showing the entire arrangement of the invention.

Figure 2 is a process flowchart.

Figure 3 is a diagram showing an example of set operations.

Figure 4 is a diagram illustrating the CSG representation.

Figure 5 is a diagram illustrating the boundary representation.

Figure 6 is a diagram illustrating elements.

Figures 7 and 8 are diagrams showing examples of non-manifold union sets.

Figure 9 is a diagram showing an implementation of data structures in the non-manifold boundary representation.

Figure 10 is a diagram illustrating an element data.

Figure 11 is a diagram showing an example of input devices.

Figure 12A is a diagram illustrating boundaries resulting from the set operation.

Figure 12B is a diagram showing correspondence of the volumes in Figure 12A.

Figure 13 is a flowchart of the update processing of geometrical data.

Figure 14 is a diagram illustrating reconstruction of faces.

Figure 15 is a diagram showing an example of primitive data structure.

Figures 16 and 17 are diagrams illustrating correspon-dence between the elements of a non-manifold union set and primitives.

Figures 18 and 20 are diagrams showing an example of a set operation history data file structure.

Figure 19 is a flowchart showing procedure for marking elements to be outputted.

Figure 21 is a diagram illustrating an example of reworking of a set operation.

A model input for a set operation may be either a primitive or a geometric model generated from the set operation on primitives. A primitive is typically a three-dimensional volume, but may be a two-dimensional surface or a one-dimensional line.

As illustrated in Figures 1 and 2, a non-manifold union set operation is executed on an input geometric model, the result of which is used to update a non-manifold boundary representation data file (blocks 1, 2, and 21). Non-manifold boundary representation means a representation method which can represent not only a manifold, but also a non-manifold (e. g. one edge shared by more than two faces). Mathematically speaking, representation space corresponds to Euclidean Cell Complex. Here, a non-manifold boundary representation data means a representation of a non-manifold boundary representation geometric model (a cell complex in topology) by neighbourhood relations of elements. In the following, volumes, faces, edges and vertexes are considered to be elements. The elements are shown in Figure 6. A non-manifold union set operation means an operation to leave model elements contained in a space that the input geometric models commonly occupy. Figure 7 shows examples of both non-manifold union set operation and of union set operation on geometric models A and B.

In addition, the correspondence between elements in the non-manifold boundary representation data file 7 and primitives is retained in an element correspondence data file 8 (blocks 3 and 22). This allows elements of a non-manifold boundary representation originating from a primitive to be identified when the primitive is specified, and to describe which primitive an element in the non-manifold boundary representation originated from when the element is specified.

Set operations include a union set operation, a difference set operation, and an intersection set operation. In all cases, elements are output, by using an output device 6, as a result of set operations, and are a subset of elements in the non-manifold boundary representation data file 7. Boundaries to be output as a result of set operations can be extracted from the non-manifold boundary representation data file 7, as, for each element, data describing whether or not the element belongs to the subset to be output are added. A history of set operations is stored in a set operation history data file 9 (blocks 4 and 23). Subsets to be output are determined based on the history of the set operations (blocks 5 and 24).

Set operation is reworked by specifying a specific primitive (block 10) and then deleting it. To this end, elements corresponding to the primitive are selected from the non-manifold boundary representation data file 7 by referring to the element correspondence data (block 25) to delete the correspondence (blocks 11 and 26). Then, the elements that no longer have correspondence with any primitive are deleted from the non-manifold boundary representation data file 7 (blocks 12 and 27).

Furthermore, the set operation history data file 9 is modified (blocks 13 and 28), and on the basis of the result, the description of a subset of the elements in the non-manifold boundary representation data file constituting boundaries of the set operations (blocks 14 and 29) is modified.

In an embodiment of the present invention, a geometric model of a result of set operations is represented by non-manifold boundary representation data, element correspondence data, and set operation history data.

A non-manifold union set of primitives A and B shown in Figure 8A is represented as a geometric model C shown in Figure 8B. That is, faces, edges and vertexes in a portion common to the primitives A and B (shaded portion in the geometric model C) are left.

A geometric model may contain a portion in which one edge is a boundary of three or more faces. Such a geometric model is called a non-manifold. An example of data structure that can handle boundary data of a non-manifold is a method by Weiler as disclosed in K. Weiler, Non-manifold Geometric Modelling," Extended Abstract for IFIP 5.2 Workshops on Solid Modelling, 1986. Figures 9B and 9C show how to represent a topological structure in which three or more faces contact an edge as shown in Figure 9A.

In Figures 9B and 9C, "fu" is an abbreviation of "face-use," and indicates a face among the elements. "eu" is an abbreviation of "edge-use," and indicates an edge among the elements. It should be noted that six edge-uses (eu1 - eu6) are generated for one edge (for example, e0), and that two face-uses (fu1 and fu2) are generated for one face (for example, f1). In Figure 9C, P1 is a pointer connecting face-uses and edge-uses of an identical face, while P2 is a pointer connecting edge-uses belonging to face-uses of adjacent faces.

Figure 10 shows an example of data managed for each element or a data block pointed by one face-use. Attribute data includes colour of a face, and a mark indicating that the face is contained in a subset to be output. Marking will be described later. A pointer to an element to be connected is topological data of a non-manifold boundary representation, which describes relations between elements as shown in Figure 9C. For a face, data indicating a curve and an equation of the curve are included as the geometrical data. For a plane, data included indicate that it is a plane, indicates coordinates of a point on the plane, and of a normal vector to the plane. Primitive data will be described later.

In the present embodiment, a closed space surrounded by faces (hereinafter simply called a "volume") is managed as an element. A face surrounding the volume is pointed as the element to be connected to the volume. The concept of the volume will be described in more detail later.

The system is provided with the B-rep of primitives in advance. Primitives input by a command vary from system to system. Generally, the following data are included: • Regular parallelpiped: Length, width and height are provided.

• Pillar: Two dimensional geometric model and height are provided (a regular parallelpiped may be considered to be a special case of this).

• Cone: Two- dimensional model and height are provided.

• Sweep geometric model: A two-dimensional geometric model and a vector indicating a direction to move the geometric model, or a curve are provided (a pillar may be considered to be a special case of this). In case of a solid of revolution, a two-dimensional model and an axis of revolution on its plane are provided.

• Sphere: Centre and radius are provided.

Figure 11 shows an example of an input device that can be used to specify set operations, and to input a geometric model.

Specification of set operations and input of a geometric model may be performed by moving a mouse 112 on a tablet 111, to move a cursor on a screen of a display 113 to select an item from a menu. Alternatively, it may be possible to enter a command through a keyboard 114 or a choice 115 (a programmable function keyboard).

It is necessary to move and position volume models in the preparation for combining basic volumes to build an intended volume. Although there are many possible concrete input methods for entering instructions, one method is to construct a homogeneous coordinate transformation matrix representing three-dimensional rotation and translation thereby converting the internal data. Data to be converted are geometric data on elements (for example, an equation of a plane).

Useful input methods include rotation or parallel translation to a coordinates system for the basic volume itself or a coordinates system for a space in which it is placed, as well as, where interactive instruction is allowed, rotation or parallel translation using any desired edge or vertex of a polyhedron placed in a space. Instructions to move are similarly provided by using the above-mentioned device.

Step I. Update of geometric data

Elements generated as a result of a non-manifold union set operation on primitives A and B shown in Figure 12A are categorized into the two following categories:

(a) Those newly created by interference between the primitives A and B. The edge E3 in Figure 12A is an example of these.

(b) Those that are parts or entire volumes, faces, edges and vertexes in the primitive A and/or B. E1 and E2 in Figure 12A are examples of these.

Figure 13 outlines the update of geometric data in a non-manifold union set operation. Elements of type (a) are processed in step 131, and those of (b) in steps 132 and 133.

Each step is described in the following:

Step 131:

First, all edges generated by crossing (interference) between faces are calculated for combination of all faces of two polyhedrons. To do this, it is necessary to calculate lines of intersection between planes, and points of intersection between edges of the face and the lines of intersection. The edges generated by intersection between the faces can be obtained by sequentially aligning the resultant points of intersection on the line of intersection. A special treatment may be required in a case where a vertex is on another face, or the faces overlap. In such a case, numerical computation is performed, but it addresses problems unique to the numerical computation, such as determination of whether faces overlap or not.

Step 132:

Faces are reconstructed by taking into consideration edges that are generated by intersection of the faces. The concept of this process is explained by referring to Figure 14. Overlapping faces A and B can be reconstructed into faces C, D and E that do not overlap. An element e is reconstructed into elements e1 and e2 through this process.

The reconstruction of a face is known in solid modelling, and therefore, this procedure is not described in detail here.

Step 133:

A volume is reconstructed by taking into consideration the faces reconstructed in step 132. The process is illustrated in Figure 12A. Volumes $V_a$ and $V_b$, which overlap each other, can be reconstructed into volumes $V_1$, $V_2$ and $V_3$ that do not overlap. Here, $V_3$ is a shaded volume originating from both $V_a$ and $V_b$, $V_1$ is a volume originating from $V_a$ but excluding $V_3$, and $V_2$ is a volume originating from $V_b$ but excluding $V_3$. An element f is reconstructed into elements f1 and f2 through this process.

This operation is an extension of the operation of step 132 to three-dimensions.

Step II. Update of topological data

Topological data are updated based on the result of generation and/or reconstruction of the elements according to step I to keep topological consistency. For example, in the case of a set of one edge and three faces as shown in Figure 9A corresponding pointer data for face-use and edge-use are generated to satisfy the relations of Figure 9C.

The correspondence between elements and primitives in a non-manifold boundary representation is established by linking data blocks for the elements with primitive data using pointers, as shown in Figure 10. Correspondence between particular elements and a certain primitive is written into the element correspondence data file.

In this case primitive data means, for example, a data structure as indicated in Figure 15. Whenever a primitive is input, such a data structure is generated in the storage device. The primitive data may be represented as a set of elements without any topological structure, as indicated in Figure 15, because it is sufficient to function as an end point of a pointer from the element data block or a start point of a pointer to the element data block. The primitive data may be simplified further than the one indicated in Figure 15.

Figures 16A and 16B show an example of correspondence. Assuming that C is a union set of the non-manifold boundary representation of a primitive A and a primitive B, an edge ae1 of the primitive A corresponds to edges E1 and E2 of the geometric model C, while an edge be1 of the primitive B corresponds to the edge E1 of the geometric model C. The correspondence as indicated in Figure 16B is written into the element correspondence data file 8.

On the other hand, in an example shown in Figure 17A, an edge E3 does not correspond to any edge of either primitive A or primitive B. In this case an element is generated from interference, elements are added to the primitive data for both primitives as indicated in Figure 17B to establish correspondence with elements in the non-manifold boundary representation. The correspondence as indicated in Figure 17C is written into the element correspondence data file 8.

A subject of a set operation may be a geometric model that is defined by set operation on primitives. Now, it is assumed that a geometric model Z is produced when a set operation between a geometric model P and a geometric model Q is conducted. In this case, it is further assumed that an element ez of the geometric model Z is created from an element ep of the geometric model P and an element eq of the geometric model Q, and is represented as:

ez = {ep, eq} (1)

Then, it is assumed that P is created by set operations on primitives A1, ... An, and Q is created by set operations on primitives B1, B2, ... Bm, and that an element ep of P and an element eq of Q can be expressed as sets of elements of the primitives as follows:

ep = {ea1, ..., ean} (2)

eq = {eb1, ... ebm} (3)

Then, because (1) can be expressed from (2) and (3) as follows:

ez = {ea1, ..., ean, eb1, ..., ebm},

it can be developed to primitives.

The same is true in a case where new elements are generated by interference. If an element generated by interference between the elements ep and eq is expressed as <ep, eq>, it can be expressed according to the relation between (2) and (3) as

{<ep, eq>} = {<eai, ebj>} ($1 \leq i \leq n$, $1 \leq j \leq m$)

and can be developed to primitives.

The set operation history is stored in a form of a tree in which data indicating kinds of set operation and data indicating geometric models are arranged. In a case where the result of a union operation on primitives A and B is further subject to an intersection operation with primitive C, the set operation history data file stores data as indicated in Figure 18. In the figure, (+) represents the union operation, while (*) represents the intersection operation.

Figure 19 outlines the procedure for marking elements to be output.

First, in step 191, logical operation on primitives is conducted by referring to a set operation history data file.

Step 192 is explained with reference to Figure 12A. Volume elements $V_1$, $V_2$ and $V_3$ are placed in the non-manifold boundary representation data file, and the element correspondence data file is updated such that these elements correspond to the primitive A or B (Figure 12B). This can be expressed by the following equations:

$V_a = \{V_1, V_3\}$

$V_b = \{V_2, V_3\}$

Now, it is assumed that the result of the logic operation in the step 191 is A (+) B, and therefore, a volume $V_d$ of the union set D to be output is $\{V_a \cup V_b\}$. Then, $V_d = \{V_1, V_2, V_3\}$, which can be found by searching for a volume that has correspondence with at least one of $V_a$ and $V_b$.

Similarly, a volume $V_e$ of a difference set E is:

$V_e = V_b \cap (-V_a) = \{V_2\}$

where $-V_a$ is a complement of $V_a$.

It can be found by searching for a volume that has correspondence with $V_b$, but not with volume $V_a$.

A volume $V_f$ of an intersection set F is $V_f = V_a \cap V_b = \{V_3\}$, results in finding a volume that has correspondence with both $V_a$ and $V_b$.

Once the volume to be output is obtained, faces surrounding the volume, edges surrounding the faces, and points at each end of the edges are sequentially obtained (step 193).

Once a subset of the elements to be output is obtained, elements belonging to the subset are given a mark indicating this fact (step 194; see Figure 10).

A conventional graphics display is used as an output device. To output the result of the set operations, it is sufficient to extract the marked elements from the non-manifold boundary. representation data file, and to present a display on the graphics display by using the data relating to the extracted elements. Hidden-line elimination and hidden-surface elimination may be performed, as appropriate, so as not to display unseen portions.

A geometric model is reshaped by eliminating a primitive involved in the set operation to be reworked. This is achieved by eliminating the correspondence of the primitive with the elements of the non-manifold boundary representation, deleting the elements having correspondence with the primitive from the non-manifold boundary representation data file, and modifying the history of the set operations to change the boundaries of the result of the set operations.

The device specifying a primitive to be deleted may have the same configuration as that of the input device.

Correspondence data relating to the primitive to be deleted is deleted from the element correspondence data file.

At that moment, if there is an element created by interference of the primitive to be deleted with another primitive, the correspondence of the element with the other primitive is also eliminated (see Figure 17A). If it is assumed that an instruction is given to delete the primitive A, the correspondence between element E1 and primitive A, and that between element E2 and primitive A are deleted from the element correspondence file. E1 and E2 originate only from the primitive A, and are contained in the non-manifold boundary representation file. In addition, the correspondence data between the element E3, which originated from both the primitives A and B, and the primitive A, and that between E3 and the primitive B are also deleted from the element correspondence data file.

For modification of the non-manifold boundary representation, data relating to the elements that no longer have the correspondence with any primitive are deleted from the non-manifold representation data file. Therefore, in a case, such as that shown in Figure 17A, it is instructed to delete the primitive A, the elements E1, E2, E3 and so on are deleted from the non-manifold representation data file.

Because several elements of the non-manifold union set are deleted, the edges, the faces and the volumes are reconstructed. This is processing similar to that performed in the steps 132 and 133 of Figure 13.

After the geometrical data is updated as described above, the topological data is also updated in a manner similar to the above-mentioned processing.

In order to update the set operation history data file, data on the deleted geometric model and the kind of the set operation on that geometric model are deleted from the set operation history data file. If it is instructed to delete the primitive B in the example shown in Figure 18, the result of the update of the set operation history data file becomes that as shown in Figure 20.

Marking of elements being output is performed in the way already described (Fig. 19).

Figure 21 schematically shows, for two-dimensional primitives, the manner in which a set operation conducted at any time can be easily reworked according to the procedure described above. In the figure, elements to be output from the non-manifold union set are indicated by black points and solid lines, while those that are not to be output are indicated by white points and broken lines. It shows the manner in which elements constituting the union set A (+) C are output as a result of an instruction to delete the primitive B after performing the set operation (A (+) B) (+) C.

The above-described procedure makes it possible to rework the set operation. The work of modifying a data file, in response to reworking of a set operation, does not depend on the order of the set operation, so that reworking can be quickly performed at any time.

This a technique makes it possible to make a modification independently of the order of set operations. This is advantageous in the modification of a solid model involving a large number of calculations because it does not require recalculation of set operations not relating to the modification. This is necessary using conventional techniques, as a new geometric model is reconstructed all over again while keeping and referring to a CSG representation, or the preceding geometric models are sequentially recovered by backtracking the operation history. Therefore, using the present technique calculation time for modification is reduced significantly.

## Claims

1. A boundary representation solid modelling system comprising:

(a) means for specifying a kind of set operations and inputting a geometric model,

(b) means for executing a non-manifold union set operation and updating a non-manifold boundary representation data file with a result of the operation, each time a geometric model is input,

(c) means for updating element correspondence data file which describes correspondence between an element of the boundary representation and an input geometric model,

(d) means for updating a set operation history data file by adding data on the specified kind of set operations and the input geometric model,

(e) means for referring to the set operation history data file and marking elements in the non-manifold boundary representation to be output as a result of the set operation, and

(f) storage means for storing the boundary representation data file, the element correspondence data file, and the set operation history data file.

2. A boundary representation solid modelling system as set forth in Claim 1, further comprising:

(g) means for specifying a geometric model to be deleted,

(h) means for deleting element correspondence data associated with a specified geometric model from the element correspondence data file, each time a geometric model to be deleted is specified,

(i) means for modifying the non-manifold boundary representation by deleting data on elements from the boundary representation data file, which elements have lost correspondence with any geometric model as a result of the deletion of the element correspondence data by the said means (h),

(j) means for updating the set operation history data file by deleting data on the deleted geometric model and the kind of set operations therefor, and

(k) means for referring to the set operation history data file and marking elements in the non-manifold boundary representation to be output as a result of the deletion of the geometric model.

3. A boundary representation solid modelling system as set forth in Claim 1 or 2, further comprising:

(1) output means for extracting data on the elements to be output from the non-manifold boundary representation data file in accordance with the marking result by said means (e) or (k).

4. A boundary representation solid modelling system as set forth in any one of Claims 1 to 3, wherein elements of the non-manifold boundary representation are a point, an edge, a face and a closed space surrounded by faces.

5. A solid modelling system as set forth in any one of Claims 1 to 4, wherein the non-manifold boundary representation data file contains:

(i) geometric data of the elements,

(ii) topological data of the elements, and

(iii) data indicating whether or not the elements belong to a subset to be output.

6. A solid modelling system as set forth in Claim 5, wherein said means (b) updates said data (i) and (ii).

7. A solid modelling system as set forth in Claim 5, wherein said means (e) determines a subset of elements in the non-manifold boundary representation to be output by referring to a history data file of the set operations, and updates said data (iii) based on the result.

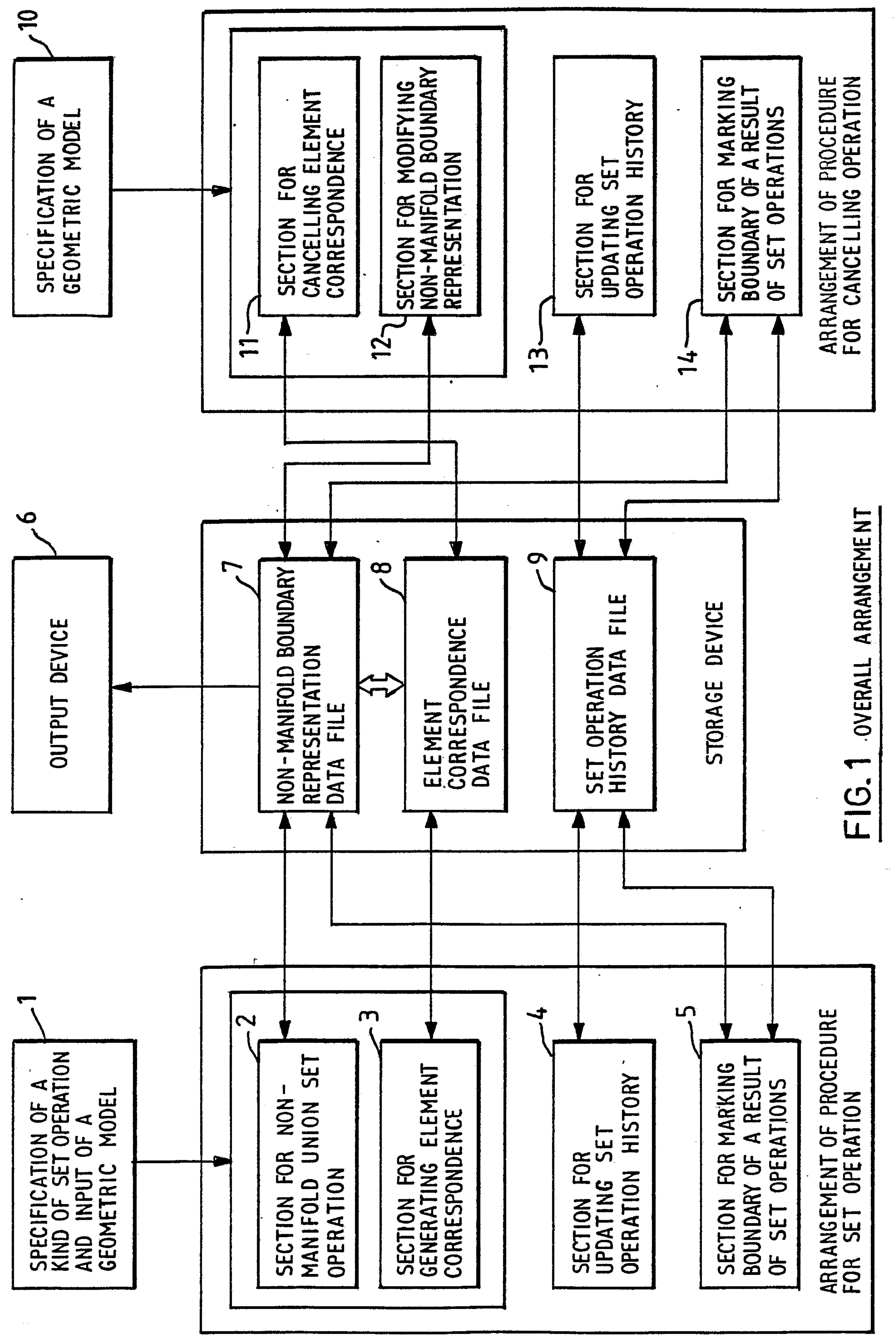


FIG. 1 OVERALL ARRANGEMENT

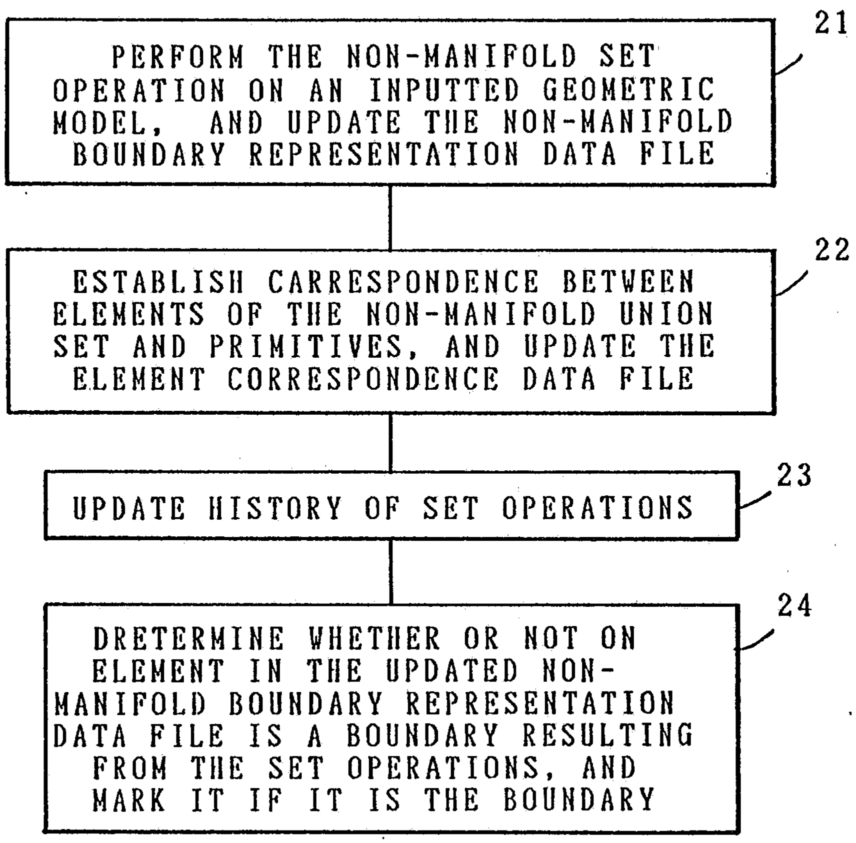


(a) FLOW OF SET OPERATION

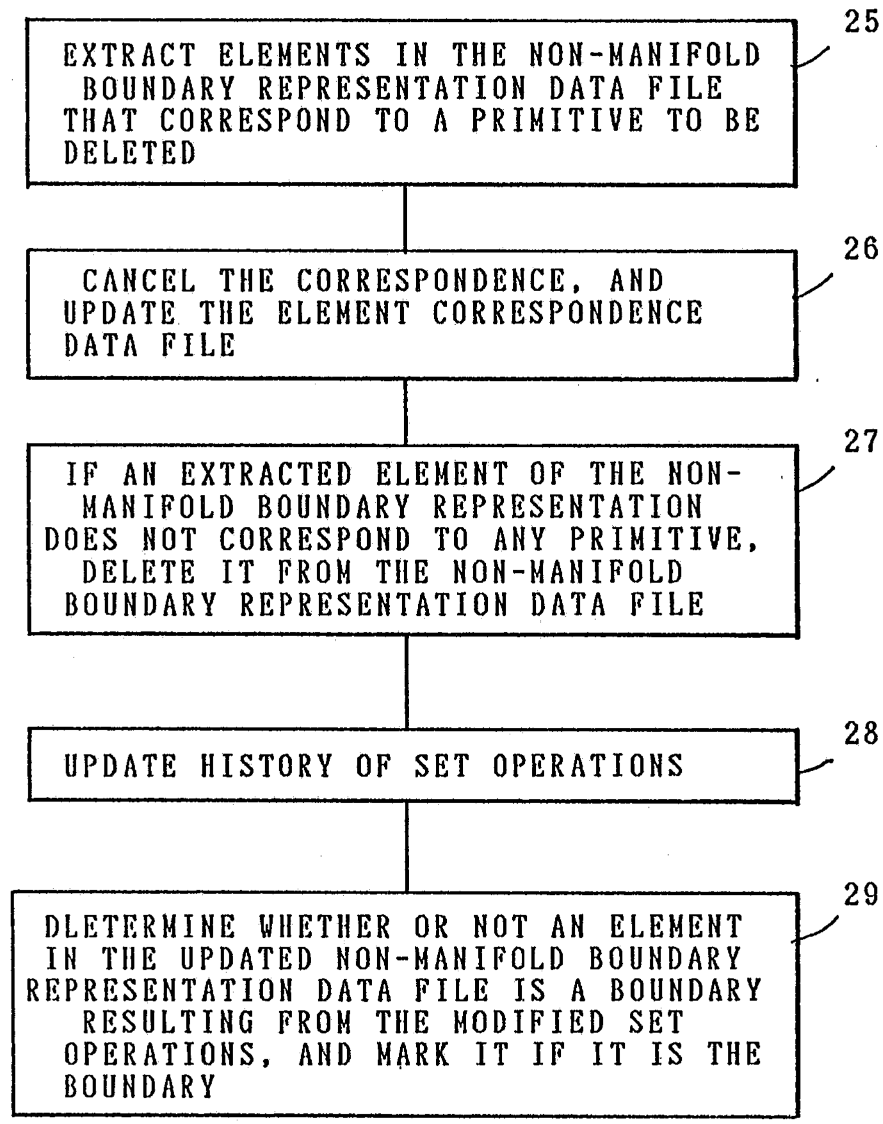


(b) PROCEDURE FOR CANCELLING SET OPERATION

FIG. 2 PROCESS FLOW

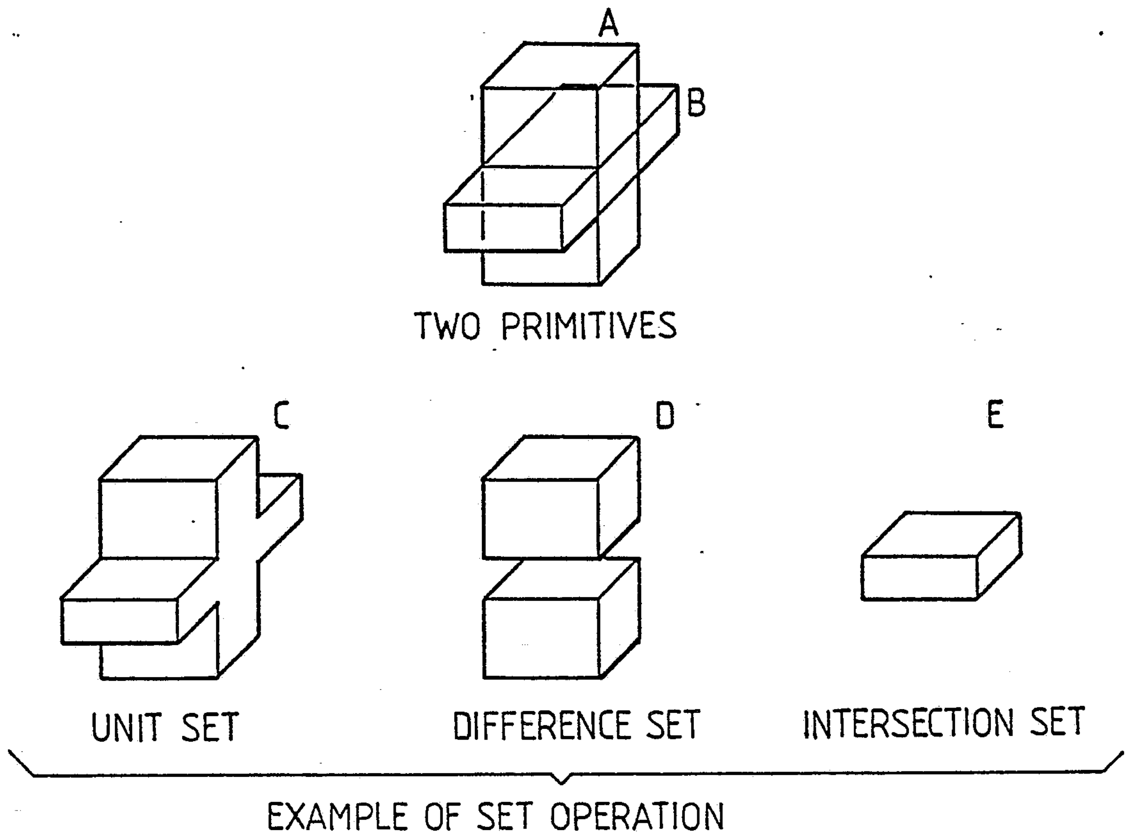


FIG. 3

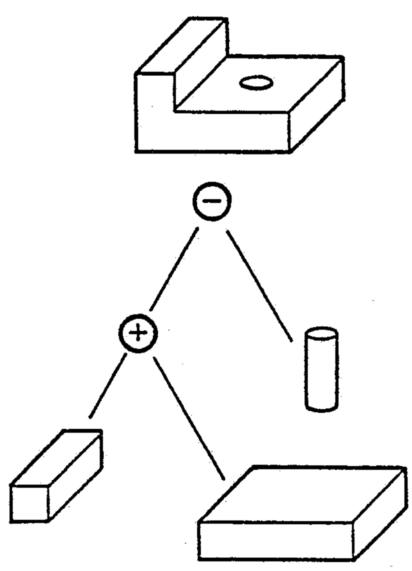

FIG. 4 CSG REPRESENTATION

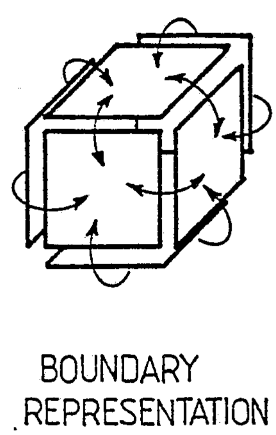


FIG. 5

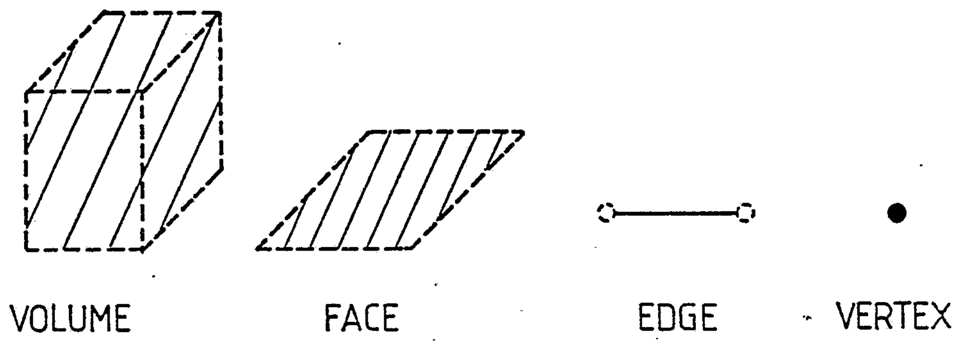


FIG. 6 ELEMENTS

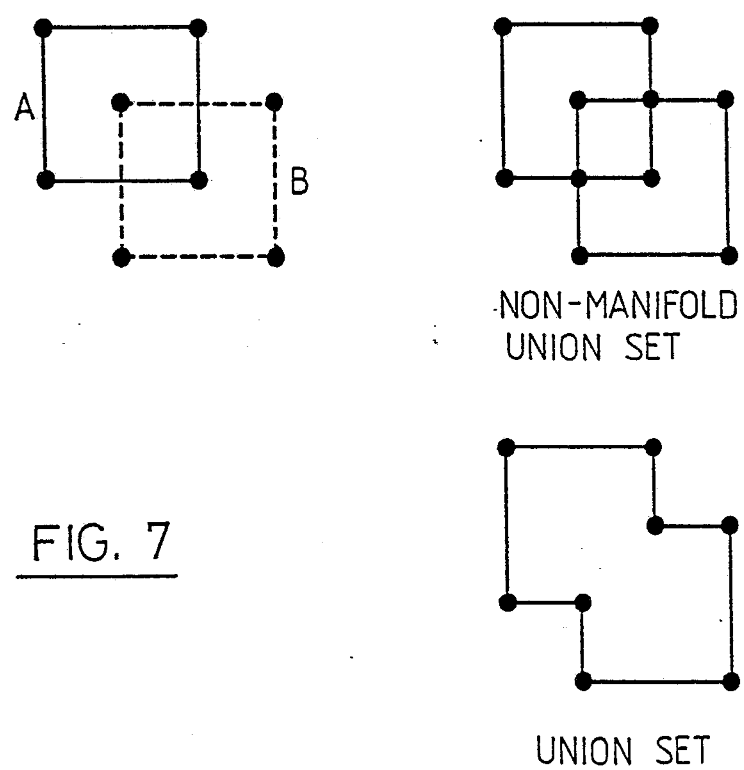


FIG. 7

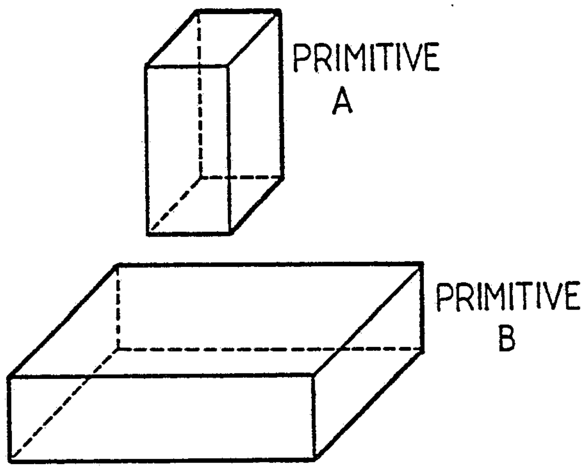


FIG. 8A

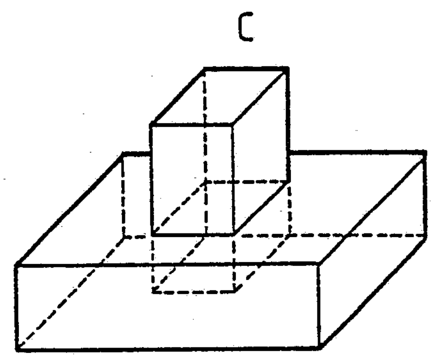


FIG. 8B

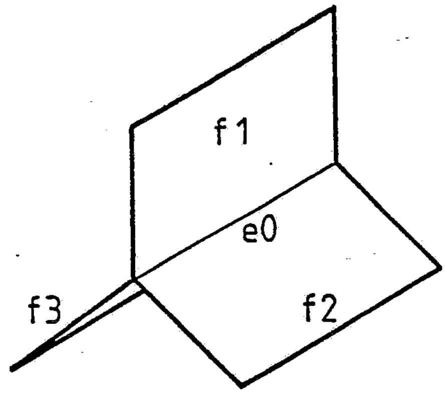


FIG. 9A

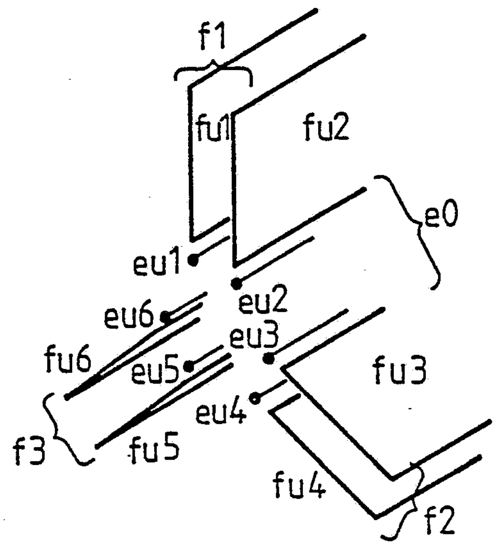


FIG. 9B

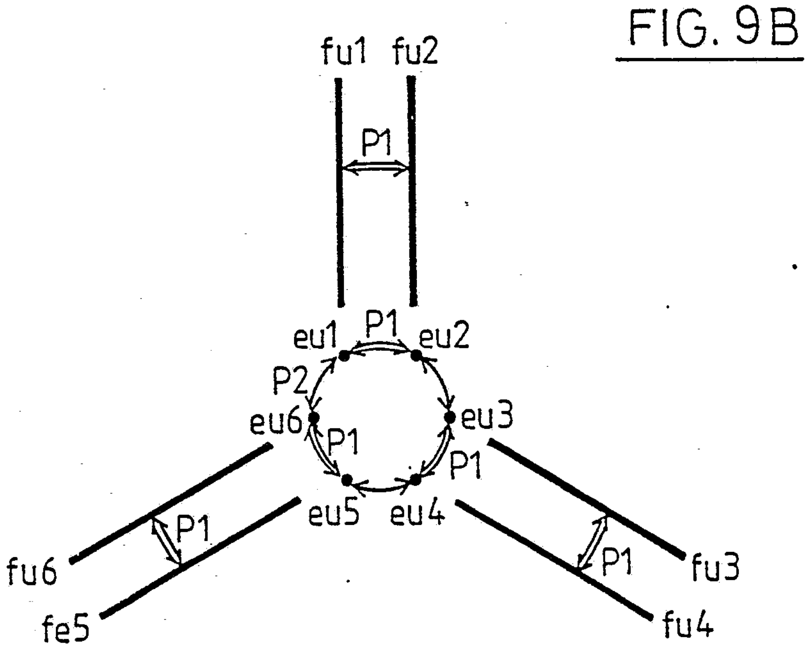


FIG. 9C

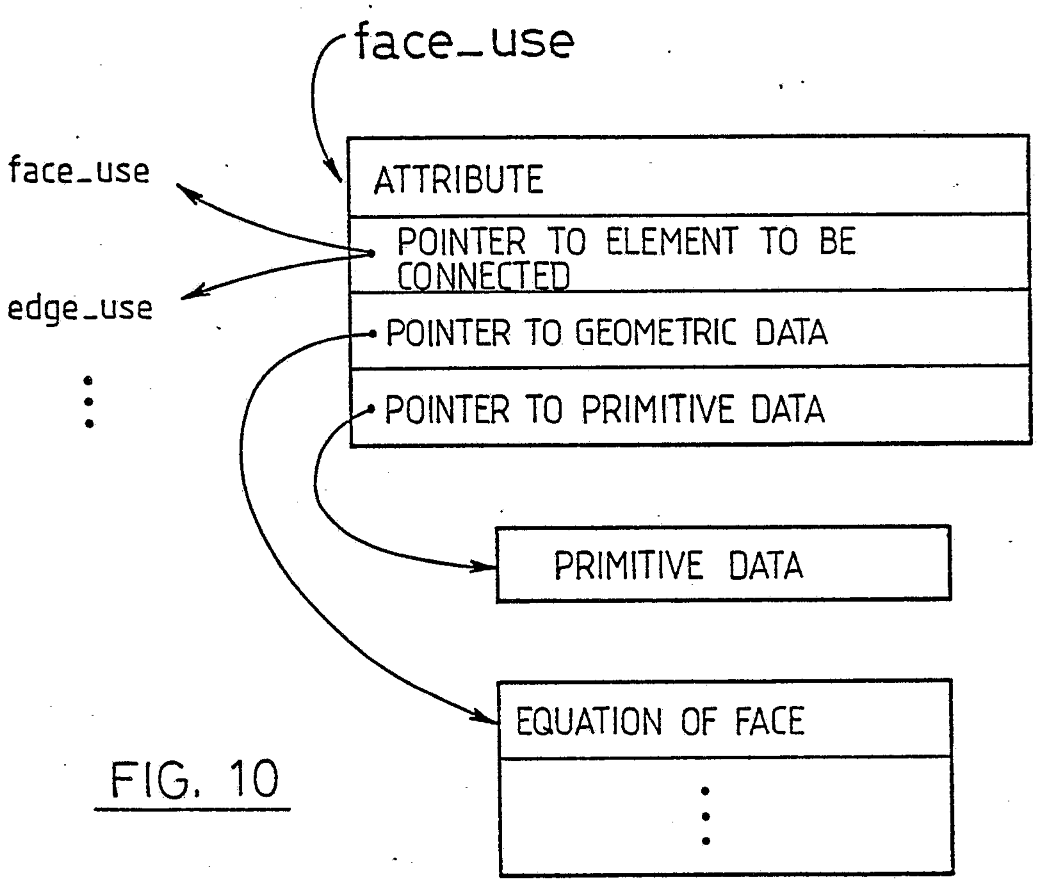
face_use
face_use
edge_use
ATTRIBUTE
POINTER TO ELEMENT TO BE CONNECTED
POINTER TO GEOMETRIC DATA
POINTER TO PRIMITIVE DATA
PRIMITIVE DATA
EQUATION OF FACE

FIG. 10

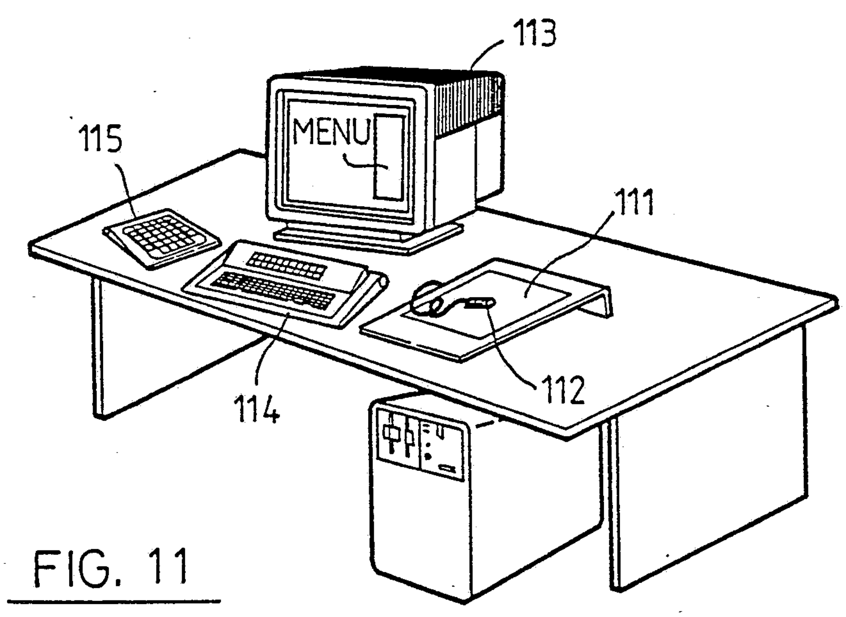
113
MENU
115
111
114
112

FIG. 11

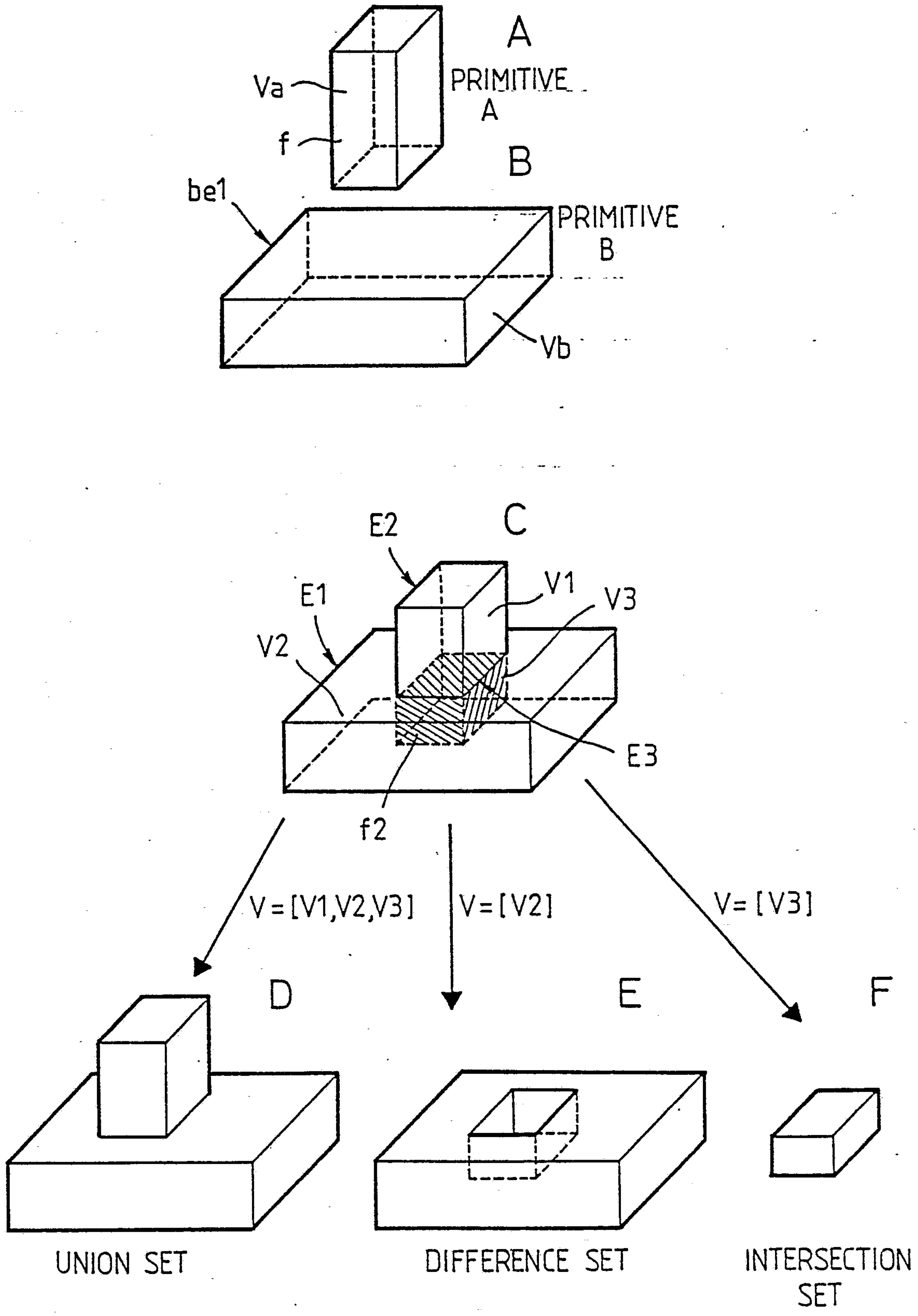


FIG. 12A BOUNDARIES AS A RESULT OF SET OPERATION

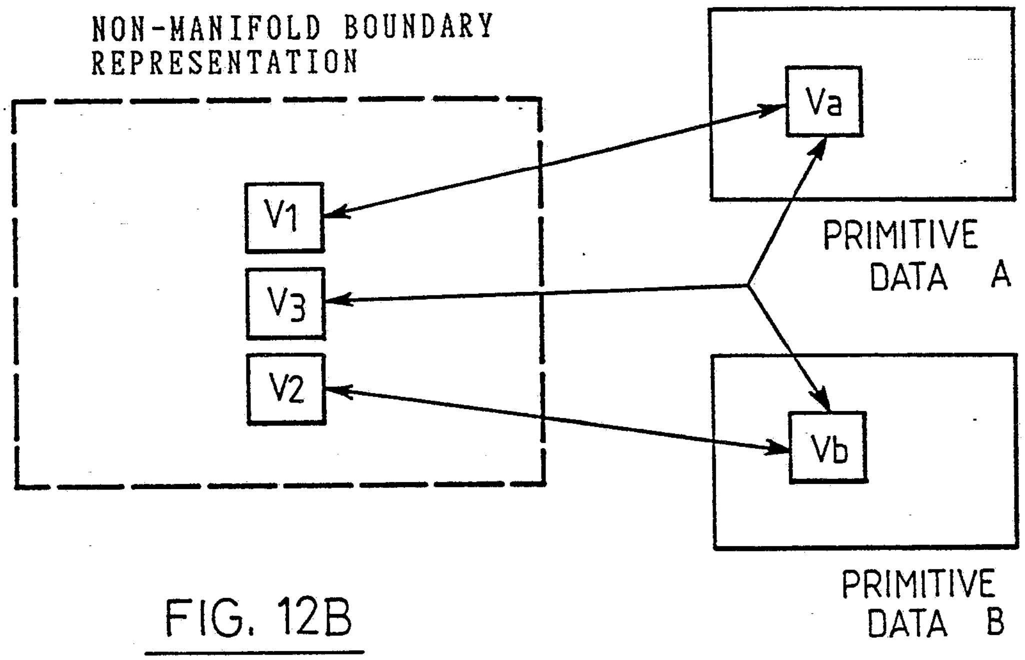


FIG. 12B

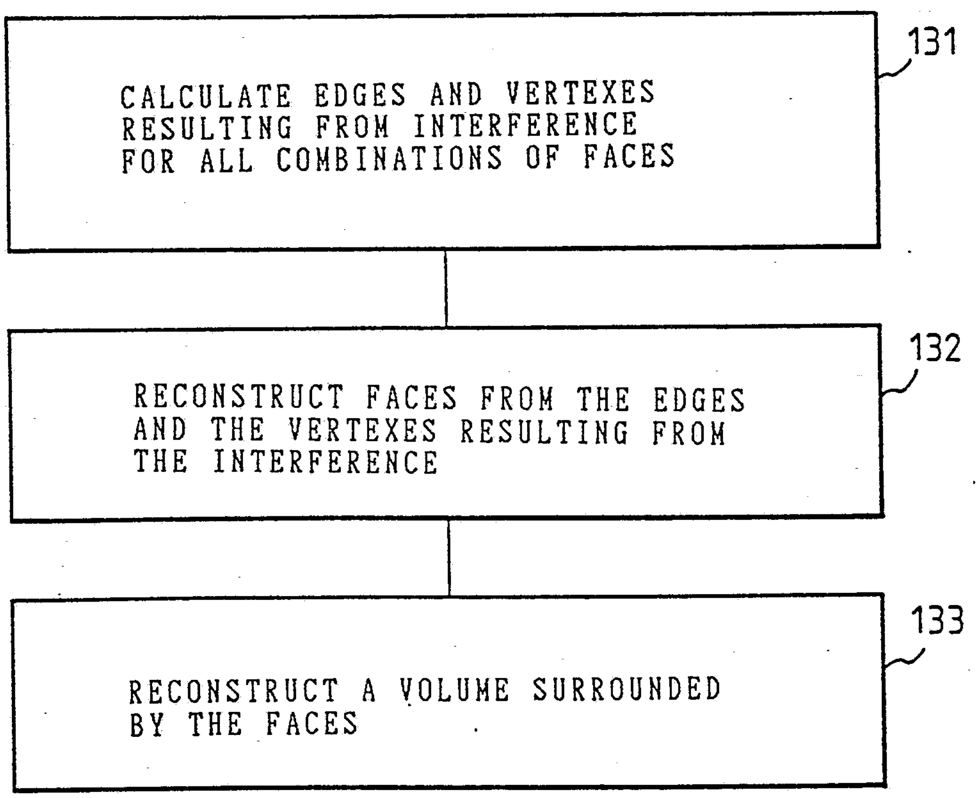


FIG. 13

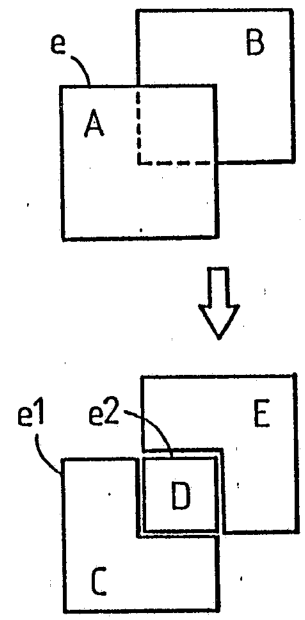


FIG. 14

FIG. 15 EXAMPLE OF PRIMITIVE DATA STRUCTURE

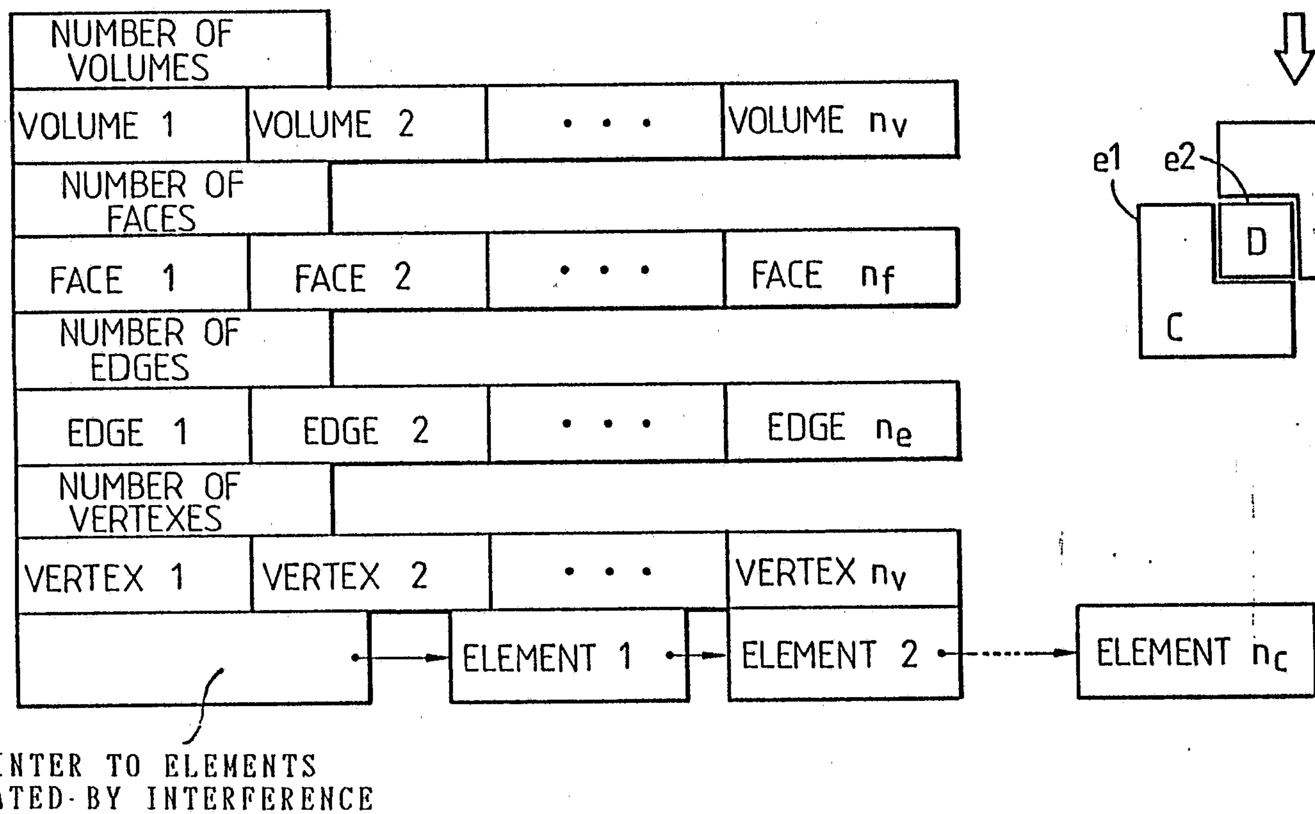

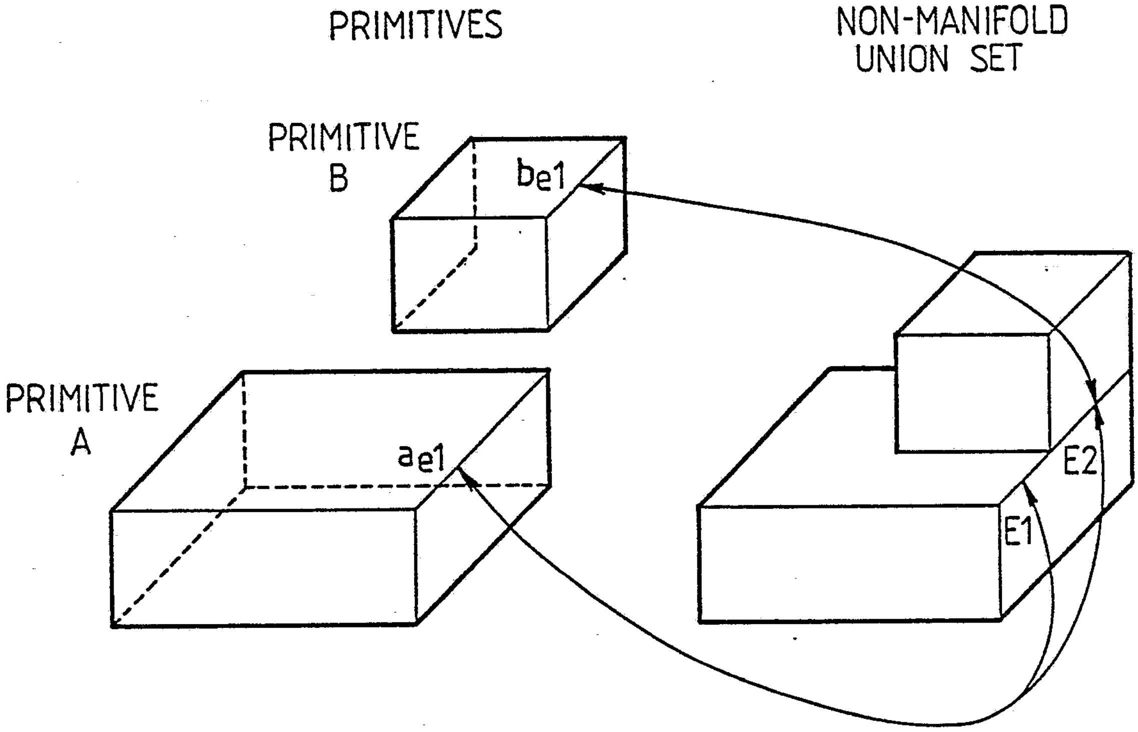


FIG. 16A CORRESPONDENCE BETWEEN ELEMENTS OF NON-MANIFOLD UNION SET AND PRIMITIVES

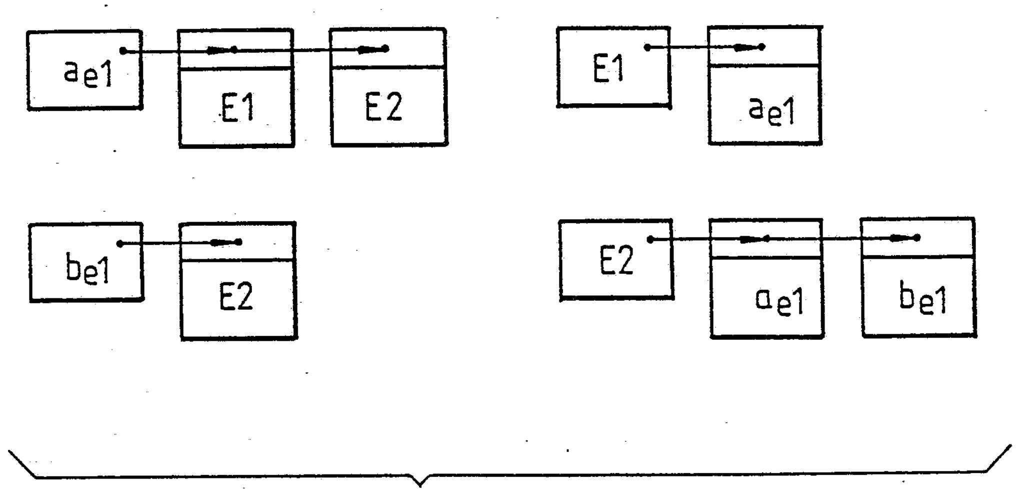


FIG. 16B EXAMPLE OF DESCRIPTION OF CORRESPONDENCE

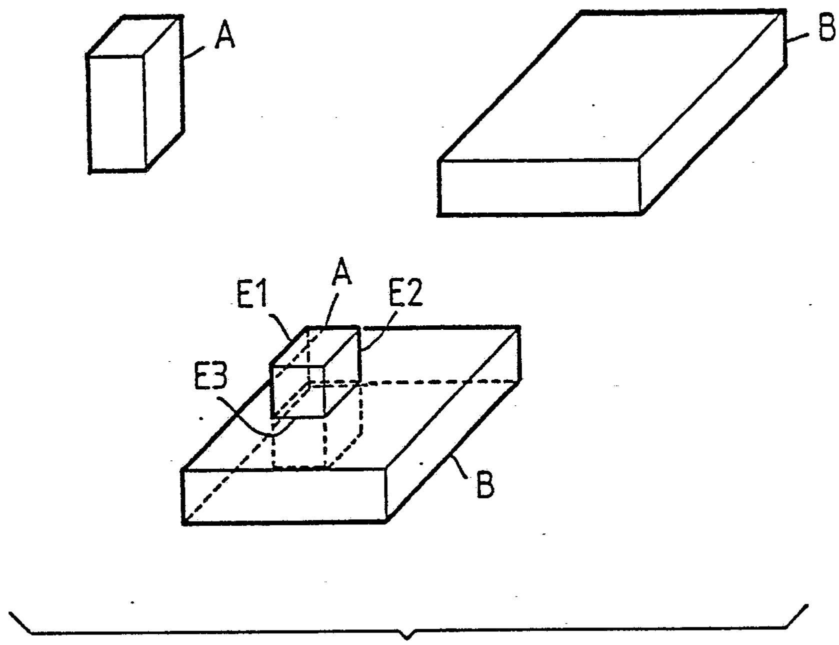


FIG. 17A

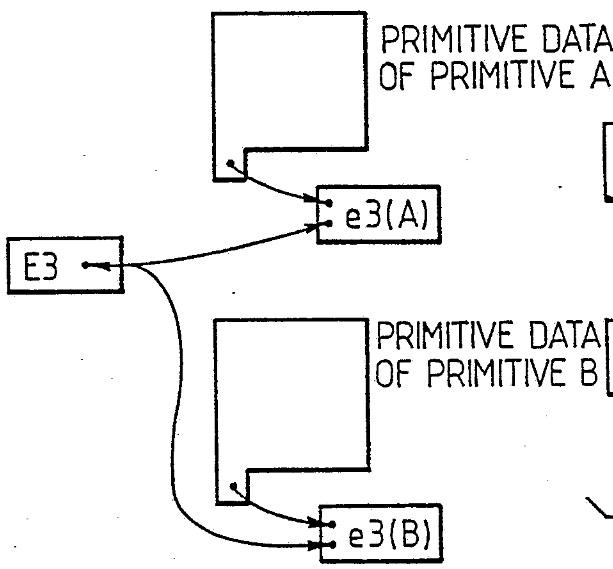


FIG. 17B

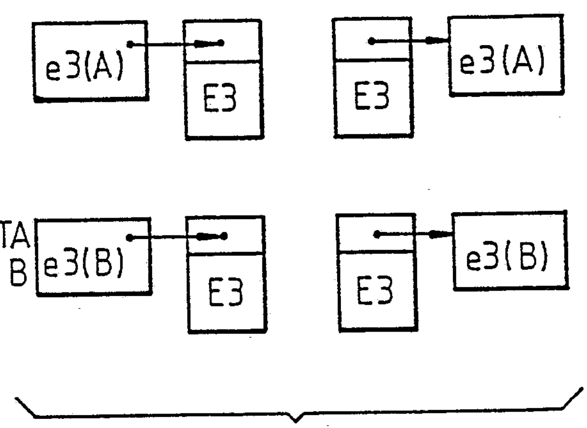


FIG. 17C

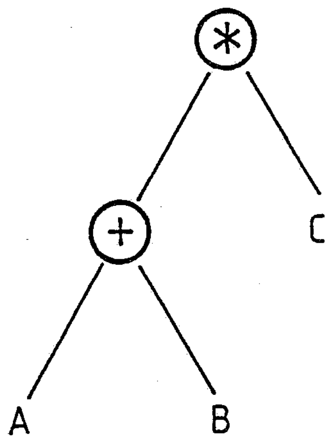


FIG. 18

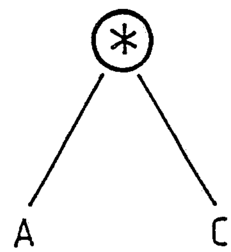


FIG. 20

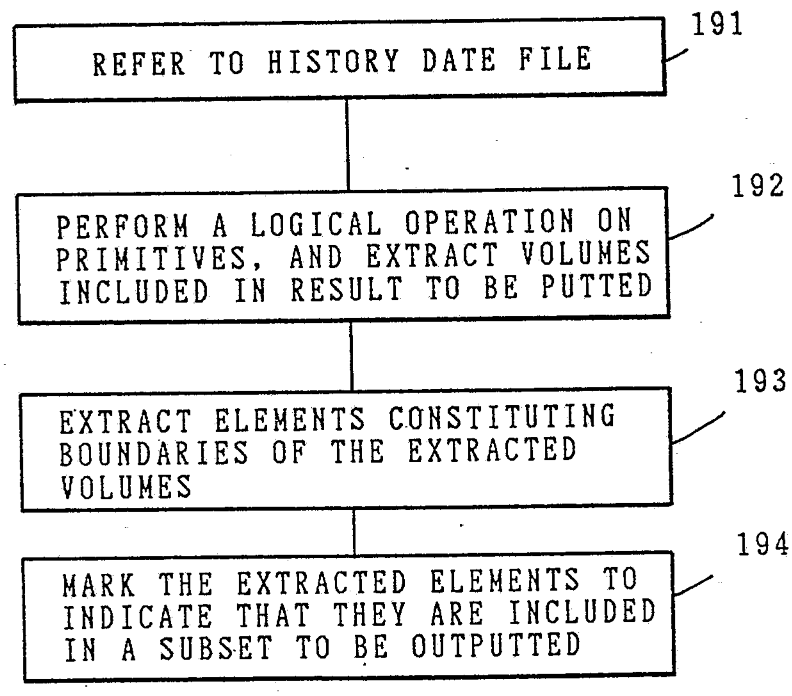


FIG. 19

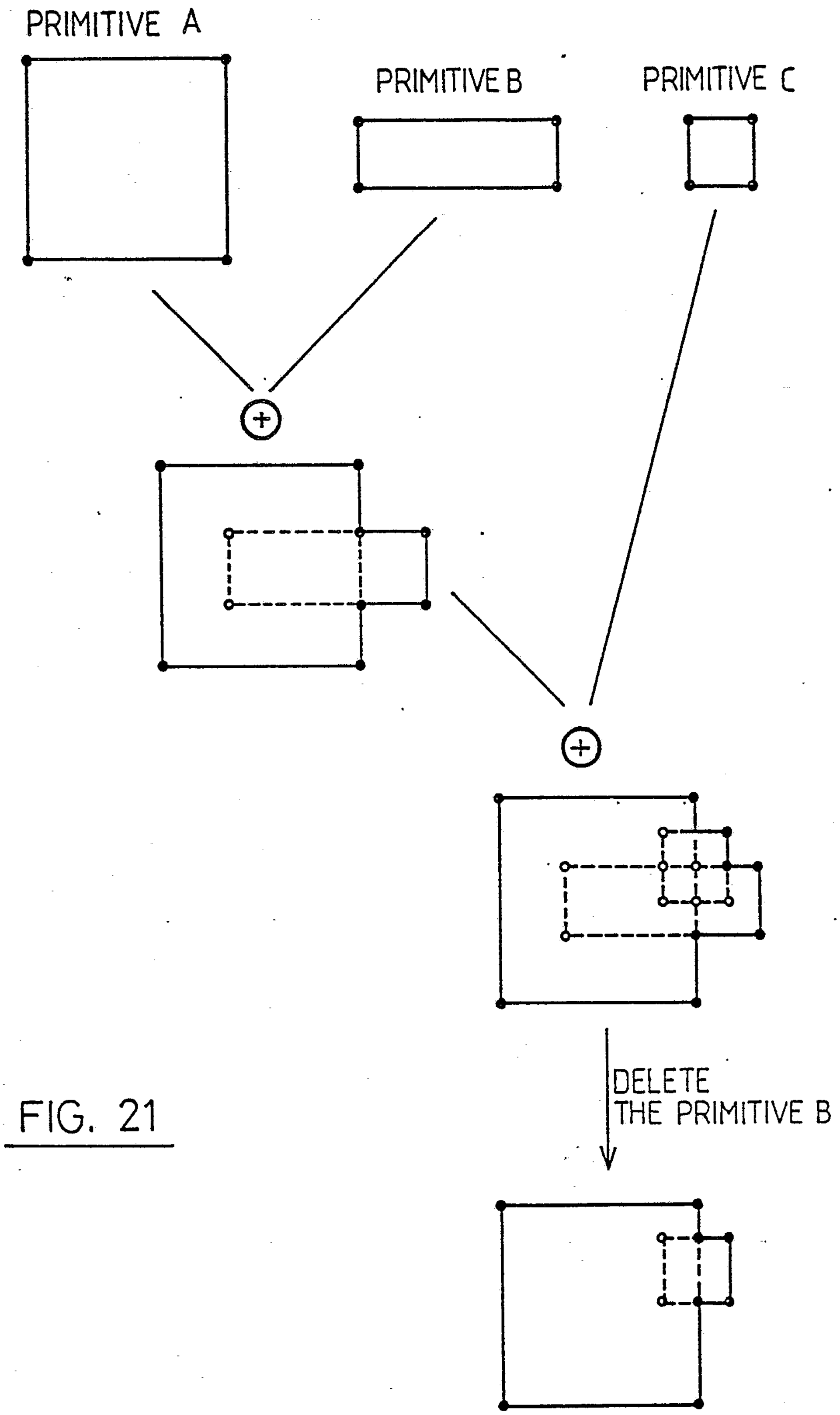


FIG. 21